# DEMANDE DE BREVET EUROPEEN

(11) **EP 0 689 261 A1**
(43) Date de publication de la demande: **27.12.1995**
(21) Numéro de dépôt: 95401451.0
(22) Date de dépôt: 20.06.1995
(51) Int. Cl.: H01P 1/203, H01Q 1/50, H02H 9/00, H03H 1/00

(54) **Dispositif de protection contre les perturbations transistoires élevées**

(30) Priorité: 24.06.1994 FR 9407804
(71) Demandeur: ALCATEL CABLE, F-92100 Clichy (FR)
(72) Inventeur: Broyer, Jean, F-77400 Pomponne (FR); Girard, Christian, F-95360 Montmagny (FR)
(74) Mandataire: Buffiere, Michelle

(57) **Abrégé**

Le dispositif de protection contre les perturbations transitoires élevées, d'origine foudre ou électromagnétique, comporte un filtre et un moyen d'entrée pour l'écoulement à la masse desdites perturbations

Il est caractérisé en ce que ledit moyen d'entrée appartient audit filtre et est constitué par une première inductance en parallèle d'entrée assurant un filtrage passe-haut et présentant une impédance résistive faible, pour supporter les courants des perturbations haute fréquence et évacuer les courants de choc des perturbations basse fréquence.

Application: protection de lignes

## Description

La présente invention concerne les dispositifs de protection contre les perturbations transitoires élevées, d'origine foudre et électomagnétique, assurant la protection des lignes d'énergie ou des lignes coaxiales de transmission VHF ou UHF et plus précisément des équipements reliés à ces lignes.

Il existe déjà de nombreux dispositifs de protection contre de telles perturbations sur les lignes. Ils comportent en général un filtre et un éclateur d'entrée qui sont tous deux montés dans un boîtier de blindage et couplés l'un à l'autre et à la ligne. L'éclateur assure l'écoulement à la masse des perturbations élevées sur la ligne et protège ainsi le filtre. Le filtre élimine les perturbations résiduelles d'énergie moindre.

Le document FR-A-2576471 décrit un tel dispositif de protection d'une ligne coaxiale contre ces perturbations, comportant un éclateur en étage d'entrée, suivi d'un filtre passe-haut, lui-même suivi d'un circuit d'écrêtage à semiconducteurs.

Le document FR-A-2436520 décrit un dispositif de même type, comportant un éclateur d'entrée et un filtre passe-bas à deux cellules en série, chacune formée par une inductance en série avec la ligne et une capacité entre l'inductance et la masse.

Ces dispositifs sont encombrants et coûteux. En outre la capacité parasite de l'éclateur désadapte souvent l'impédance du filtre.

Le document FR-2319224 montre un autre dispositif de protection de lignes coaxiales reliées à des équipements alimentés en faible énergie, qui sont sans éclateur et sont destinés à protéger ces lignes ou ces équipements contre les rayonnements radioélectriques parasites d'émetteurs puissants avoisinants. Ce dispositif comporte un filtre passe-bande formé d'une ou de deux cellules de filtrage alors en parallèle l'une sur l'autre et raccordées aux lignes coaxiales à protéger par des tronçons de ligne coaxiale et un Té coaxial de branchement. Chaque cellule de filtrage comporte un quadripôle de filtrage de type passe-bande, ayant une borne d'entrée et/ou de sortie reliée d'une part au conducteur de la ligne coaxiale d'entrée et/ou de sortie correspondante et d'autre part à la masse à travers un circuit résonant série LC de blocage des parasites radioélectriques. Ce circuit LC de blocage présente une impédance négligeable dans la bande passante du quadripôle et élevée en dehors de ladite bande pour atténuer les parasites radioélectriques hors bande. Le quadripôle de chaque cellule comporte deux circuits oscillants LC couplés en parallèle par une capacité ajustable. Sa largeur de bande est celle des deux circuits oscillants.

Un tel dispositif assure d'une part un filtrage des signaux transmis par le conducteur central de la ligne coaxiale d'entrée et d'autre part une atténuation des parasites radioélectriques transmis par le conducteur extérieur de cette même ligne. Il ne se prête pas à l'élimination des courants de choc tels que ceux dus à la foudre transmis par le conducteur central.

La présente invention a pour but de réaliser de manière simple une protection efficace contre les perturbations transitoires élevées, d'origine foudre et électromagnétique.

Elle a pour objet un dispositif de protection contre les perturbations transitoires élevées, d'origine foudre et électromagnétique, comportant un filtre, à inductances et capacités reliées entre elles et à une masse, et un moyen d'entrée d'écoulement à ladite masse desdites perturbations, relié entre une entrée dudit filtre et la masse, caractérisé en ce que ledit moyen d'entrée appartient audit filtre et est constitué par une première inductance en parallèle d'entrée dudit filtre, réalisant un filtrage passe-haut et présentant une impédance résistive faible, pour supporter les courants des perturbations haute fréquence et évacuer les courants de choc des perturbations basse fréquence.

Ce dispositif présente avantageusement en outre au moins l'une des caractéristiques additionnelles suivantes:
- ledit filtre est un filtre passe-bande sélectif, comportant plusieurs étages successifs passe-haut et passe-bas entre ladite inductance en parallèle d'entrée et une sortie, limitant la bande passante du filtre.
- ladite première inductance est constituée par un conducteur électrique de section nettement supérieure à celle des autres inductances dudit filtre.
- pour la protection de signaux dits utiles d'une gamme de fréquences allant sensiblement de 1 à 15GB, ledit filtre est réalisé en technologie de ligne à ruban sur un substrat diélectrique et monté dans un boîtier blindé.
- pour la protection de signaux dits utiles d'une gamme de fréquences allant sensiblement de plusieurs dizaines à un millier de MHz, ledit filtre est monté dans un boîtier blindé à plusieurs cavités résonantes dans lequel celles des inductances, qui sont en série les unes avec les autres, assurent les traversées de paroi d'une cavité à l'autre.

Les caractéristiques et avantages de la présente invention ressortiront de la description faite ci-après de deux exemples de réalisation illustrés dans les dessins ci-annexés. Dans ces dessins:
- la figure 1 est le schéma électrique d'un dispositif de protection, selon l'invention, destiné à la protection d'une ligne de transmission dont les signaux utiles sont dans une première gamme de fréquences,
- la figure 2 montre un mode préféré de réalisation du dispositif de la figure 1,
- la figure 3 est le schéma électrique d'un dispositif de protection selon l'invention, destiné à une ligne de transmission dont les signaux utiles sont compris dans une deuxième gamme de fréquences.

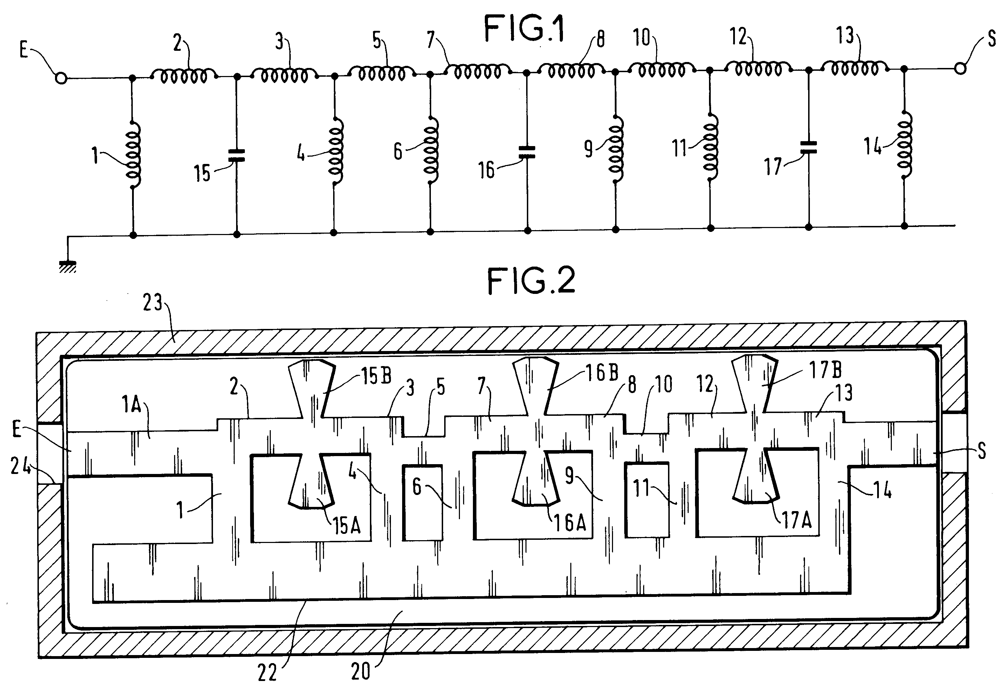

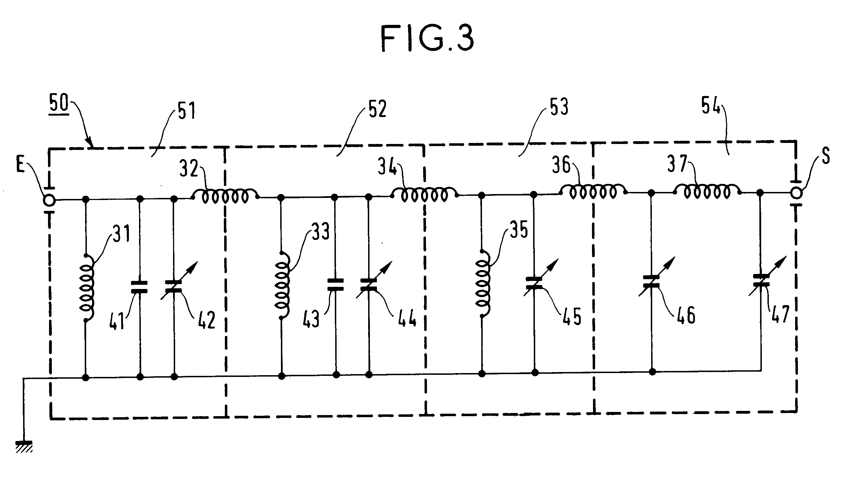

Les schémas électriques donnés dans les figures 1 et 3 sont ceux de deux filtres passe-bande très sélectifs. Leur différence résulte de leur bande passante différente. Ils assurent de manière similaire la protection d'une ligne coaxiale de transmission contre les courants de choc des perturbations d'origine foudre et électromagnétique.

Le filtre passe-bande représenté dans la figure 1 est en particulier un filtre de bande passante allant sensiblement de 2, 4 à 2,7GHz, mais pouvant être différente en étant comprise entre 1 et 15GHz.

Il comporte une première inductance en parallèle 1, reliée entre une entrée E du filtre et la masse, des inductances en série 2, 3, 5, 7, 8, 10, 12 et 13, reliées en série les unes avec les autres entre l'entrée E et une sortie S du filtre, des inductances en parallèle 4, 6, 9, 11 et 14, chacune reliée entre l'une des inductances série 3, 5, 8, 10 et 13 et la masse, et des capacités en parallèle 15, 16 et 17, chacune reliée entre l'une des autres inductances série 2, 7 et 12 et la masse.

Dans ce filtre, l'inductance d'entrée en parallèle 1 constitue un étage d'entrée de filtrage passe-haut. La particulatrité de cette inductance, et par là du filtre, est qu'elle présente une impédance inductive de valeur choisie pour le filtrage passe-haut réalisé et une impédance résistive de valeur faible, pour supporter les courants des perturbations haute fréquence filtrées et pour l'écoulement direct à la masse des courants de choc des perturbations basses fréquences reçues sur l'entrée E. Ces perturbations basses fréquences sont celles possibles d'origine foudre et sont également une bonne partie de celles possibles d'origine électromagnétique.

Les perturbations de fréquences relativement élevées d'origine électromagnétique sont éliminées par les étages passe-bas du filtre. Ceux-ci sont définis par chacune des inductances en série 2, 7, 12 et chacune des capacités en parallèle 15, 16, 17 associée à l'inductance concernée. Les perturbations résiduelles basse fréquence sont quant à elles éliminées par les étages passe-haut que définissent entre elles les inductances série et parallèle 3 à 6, 8 à 11 et 13-14.

Ce sont les différents étages passe-haut et passe-bas en série du filtre qui limitent sa bande passante en fonction des fréquences des signaux utiles qui sont transmis sur une ligne coaxiale d'entrée, dont le conducteur central est relié à l'entrée E, et sont reçus sur une ligne coaxiale de sortie, dont le conducteur central est relié à la sortie S. Ce filtre, ainsi que les filtres dont la bande passante est comprise dans la gamme de fréquences de 1 à 15GHz, sont de préférence réalisés en technologie de type "ligne à ruban" (dit "strip-line" selon la terminologie anglo-saxonne), ainsi que montré dans la figure 2.

Dans cette figure 2, on voit un substrat diélectrique 20 portant sur l'une de ses faces les composants du filtre de la figure 1 identifiés par les références les désignant dans la figure 1 et réalisés par des rubans conducteurs. Ces rubans ont une épaisseur constante, exception faite de l'inductance d'entrée dont l'épaisseur est renforcée et de 3 à 5mm pour présenter une impédance résistive très faible, en même temps que l'impédance inductive voulue pour sa fonction d'étage passe-haut. La largeur des rubans est la même pour les différentes inductances, exception faite de la portion terminale notée 1A de l'inductance 1, définissant l'entrée E, qui est de largeur légèrement accrue pour obtenir une impédance caractéristique adaptée à celle de la ligne coaxiale, typiquement de 50 Ohm. L'autre extrémité de cette inductance 1 est reliée à une plaque ou une métallisation de masse, non visible, sur l'autre face du support, la liaison traversant le substrat et étant prévue pour supporter les courants de chocs évacués à la masse.

Chacune des capacités 15, 16 et 17 du schéma électrique est réalisée par deux capacités en parallèle l'une sur l'autre, ainsi que noté par les lettres A et B supplémentaires associées à leur référence numérique. L'autre extrémité de cette inductance 1 est reliée à une plaque ou une métallisation de masse, non visible, sur l'autre face du support, la liaison traversant le substrat et étant prévue pour supporter les courants de chocs évacués à la masse.

L'une des armatures des capacités a une forme de secteur sensiblement circulaire ainsi que visible sur le substrat l'autre armature est définie par la plaque ou métallisation de masse, sur l'autre face du substrat.

Un ruban de continuité 22 relie entre elles et à la masse les extrémités concernées des inductances 4, 6, 9, 11 et 14 à l'extrémité mise à la masse de l'inductance d'entrée 1. En variante ces extrémités sont reliées par un trou individuel métallisé à la plaque ou métallisation de masse.

Le substrat ainsi équipé est monté dans un boîtier de blindage 23, en acier, qui présente une ouverture circulaire 24 centrée en regard de l'entrée E, pour définir avec elle un accès coaxial d'entrée, et une ouverture circulaire 25 centrée en regard de la sortie S pour définir avec elle un accès coaxial de sortie.

Le filtre passe-bande représenté dans la figure 3 a en particulier une bande passante de 100 à 500 MHz, ou tout au moins comprise dans une gamme de fréquences allant de 80 à 1000 MHz, environ.

Il comporte une inductance d'entrée en parallèle 31, reliée entre une entrée E et la masse, des inductances série 32, 34, 36 et 37, reliées en série les unes aux autres entre l'entrée E et la sortie S du filtre, des inductances en parallèle 33 et 35, chacune reliée entre l'une des inductances série 32 et 34 et la masse, et des capacités en parallèle 41 à 47. Les capacités 41 et 42 sont en parallèle l'une sur l'autre et sur l'inductance 31. Les capacités 43 et 44 sont en parallèle l'une sur l'autre et reliées à l'inductance 33. La capacité 45 est en parallèle sur l'inductance 35 et reliée avec elle à l'inductance 34. La capacité 46 ou 47 est reliée entre l'inductance 46 ou 47 et la masse. Les capacités 42 et 44 à 47 sont ajustables.

La protection assurée par ce filtre est tout à fait analogue à celle assurée par le filtre de la figure 2, grâce à son étage d'entrée passe-haut, défini par l'inductance 31, à ses étages passe-bas en série définis par les capacités 41, 42 et 43, 44, par les capacités 45 et 46 et l'inductance 36, et par l'inductance 37 et la capacité 47, et à ses étages passe-haut en série, définis par les inductances 32 et 33 d'une part et 34 et 35 d'autre part. L'inductance 31, sa portion terminale d'entrée et sa portion terminale opposée mise à la masse sont renforcées pour écouler directement à la masse les courants de choc des perturbations basse fréquence.

Ainsi que représenté sur cette même figure 3, ce filtre est de préférence réalisé dans des cavités résonantes 51 à 54 d'un boîtier blindé correspondant 50. Les inductances 32, 34 et 36 assurent les traversées de paroi d'une cavité à l'autre et sont constituées par un conducteur linéaire traversant une perle isolante montée dans une ouverture de paroi entre deux cavités successives. Les inductances 31, 33 et 35 et les capacités 41 à 47 sont implantées dans les cavités respectives. Les deux cavités terminales ont une ouverture circulaire dans leur paroi frontale dans laquelle est centrée l'entrée E ou la sortie S du filtre pour former les accès coaxiaux d'entrée et de sortie. L'inductance 31 d'entrée est réalisé quant à elle par un conducteur qui est spiralé avec un faible nombre de spires et dont la section est nettement supérieure à celles des conducteurs des autres inductances. Son impédance inductive est définie pour réaliser le filtrage passe-haut d'entrée avec des pertes minimales dans la bande passante du filtre et son impédance résistive pour écouler les perturbations d'énergie élevée basse fréquence à la masse. Les capacités ajustables permettent de compenser les autres composants du filtre et donc d'optimiser les performances du filtre dans sa bande passante, en particulier son taux d'ondes stationnaires et son affaiblissement.

Ces filtres passe-bande sélectifs sont de faible volume et de faible masse. Dans leur bande passante, ils sont à faible taux d'ondes stationnaires et à affaiblissement inférieur à 0,5 dB. Ils peuvent supporter et écouler à la masse des courants de choc d'origine foudre de 40kA pendant 20 microsecondes, ceci à plusieurs reprises. Avec le premier de ces deux filtres, la tension résiduelle d'origine foudre est inférieure à 10V, avec le second elle est inférieure à 100V. Dans l'un et l'autre des deux filtres, cette tension résiduelle d'origine foudre et les perturbations d'origine électromagnétique de fréquences relativement hautes sont aisées à éliminer par les différents étages en série passe-haut et passe-bas du filtre.

## Revendications

**1/** Dispositif de protection contre les perturbations transitoires élevées, d'origine foudre et électromagnétique, comportant un filtre, à inductances et capacités reliées entre elles et à une masse, et un moyen d'entrée d'écoulement à ladite masse desdites perturbations, relié entre une entrée dudit filtre et la masse, caractérisé en ce que ledit moyen d'entrée appartient audit filtre et est constitué par une première inductance en parallèle (1, 31) d'entrée dudit filtre, réalisant un filtrage passe-haut et présentant une impédance résistive faible, pour supporter les courants des perturbations haute fréquence et évacuer les courants de choc des perturbations basse fréquence.

**2/** Dispositif selon la revendication 1, caractérisé en ce que ledit filtre est un filtre passe-bande sélectif, comportant plusieurs étages successifs passe-haut et passe-bas entre ladite inductance en parallèle d'entrée et une sortie, limitant la bande passante du filtre.

**3/** Dispositif selon l'une des revendications 1 et 2, caractérisé en ce que ladite première inductance (1, 31) est constituée par un conducteur électrique de section nettement supérieure à celle des autres inductances dudit filtre.

**4/** Dispositif selon l'une des revendications 1 à 3, destiné à la protection de signaux dits utiles d'une gamme de fréquences allant sensiblement de 1 à 15GH, caractérisé en ce que ledit filtre est réalisé en technologie de ligne à ruban sur un substrat diélectrique (20) et monté dans un boîtier blindé (23).

**5/** Dispositif selon l'une des revendications 1 à 3, destiné à la protection de signaux dits utiles d'une gamme de fréquences allant sensiblement de plusieurs dizaines à un millier de MHz, caractérisé en ce que ledit filtre est monté dans un boîtier blindé (50) à plusieurs cavités résonantes (51-54) dans lequel celles des inductances (32, 34, 36), qui sont en série les unes avec les autres, assurent les traversées de paroi d'une cavité à l'autre.
